Europäisches Patentamt

European Patent Office

Office européen des brevets

(11) Numéro de publication: **0 341 166**
**A1**

## (12) DEMANDE DE BREVET EUROPEEN

(21) Numéro de dépôt: **89420160.7**

(22) Date de dépôt: **28.04.89**

(51) Int. Cl.⁴: **H 04 L 11/16**

(30) Priorité: **06.05.88 FR 8806673**

(43) Date de publication de la demande:
**08.11.89 Bulletin 89/45**

(84) Etats contractants désignés:
**AT BE CH DE ES GB IT LI LU NL SE**

(71) Demandeur: **COMPEX (société anonyme)**
**Zae de Pré Mairy Promery**
**F-74370 Pringy (FR)**

(72) Inventeur: **Dutruel, Albain**
**Les Tivillons Charvonnex**
**F-74370 Pringy (FR)**

**Ryckeboer, Christian**
**2 avenue Bouvard**
**F-74000 Annecy (FR)**

(74) Mandataire: **de Beaumont, Michel**
**Cabinet Poncet 7, chemin de Tillier B.P. 317**
**F-74008 Annecy Cédex (FR)**

(54) **Procédé et dispositif de transmission asynchrone de données par paquets.**

㉗ Le procédé consiste à transmettre des messages sur le mode asynchrone, les messages comprenant un caractère de début de message (CD), un caractère désignant l'adresse du destinataire (AD), éventuellement un caractère désignant l'adresse de l'expéditeur (AE), éventuellement des caractères contenant les informations significatives du message (CS), et un caractère de fin de message (CF). Les caractères de début de message (CD) et de fin de message (CF) sont constitués d'une impulsion continue d'une longueur égale au nombre des signaux binaires significatifs d'un caractère normal de message augmenté de deux signaux binaires. Une telle impulsion est reconnue par les circuits de contrôle de trame, dans le cas où les caractères sont dépourvus de signaux binaires de parité ; ils sont reconnus par les signaux de contrôle de parité dans le cas où les caractères sont pourvus de signaux binaires de parité.

Fig.2

## Description

### PROCEDE ET DISPOSITIF DE TRANSMISSION ASYNCHRONE DE DONNEES PAR PAQUETS

La présente invention concerne les réseaux de communication logique formés d'équipements émetteurs-récepteurs, et plus particulièrement les réseaux permettant une communication de type multipoints de paquets de données. Dans un tel mode de communication, chaque émetteur-récepteur peut communiquer avec chacun des autres émetteurs-récepteurs du réseau, en transmettant des paquets de données sur un support de transmission de données commun à tous les émetteurs-récepteurs. Chaque paquet de données contient en lui-même l'adresse de son destinataire, de manière analogue à une lettre ou un paquet dans le réseau postal.

On connaît déjà de nombreux types de réseaux de communication de données de type multipoints par paquets. Le support de transmission de données est formé d'un réseau d'un ou plusieurs milieux de transmission, tels que des cables coaxiaux, des fibres optiques ou autres, connectés ensemble et de manière permanente à une pluralité d'émetteurs-récepteurs. Les émetteurs-récepteurs peuvent être des calculateurs universels, des calculateurs spécialisés (micro-processeurs), des dispositifs tels que des postes d'entrée et de sortie, ou des terminaux éloignés ou divers autres organes périphériques.

L'une des fonctions principales que doit assurer un réseau de transmission de données de type multipoints par paquets de type probabiliste est la gestion des collisions. Le support de transmission de données ne peut en effet généralement transmettre qu'un seul paquet à la fois. Si deux émetteurs décident d'envoyer un message simultanément, il se produit une collision sur le support de transmission de données, de sorte que les données ne sont pas reçues correctement. Pour gérer ces collisions, on connaît déjà des réseaux utilisant le principe de la contention. Selon ce principe, chaque émetteur-récepteur raccordé sur le réseau ne peut émettre que si aucune autre transmission n'est en cours.

Les besoins en communication rapide entre ordinateurs ont conduit à développer des réseaux utilisant les techniques de transmission synchrone, travaillant par exemple à des vitesses de plusieurs megabauds. Dans ces techniques, le codage des signaux permet généralement de regénérer l'horloge en réception, c'est à dire que les données transmises véhiculent le signal d'horloge de l'expéditeur, et ce signal d'horloge est utilisé par le destinataire pour échantillonner les signaux binaires reçus et désérialiser l'information. Dans ce type de liaison, tous les caractères sont émis à la suite les uns des autres, sans temps mort, et le début de la transmission se caractérise en général par l'envoi d'un ou d'une succession de signaux binaires utilisés par le récepteur pour se synchroniser. Toute interruption de transmission entraîne la désynchronisation du destinataire.

Le document FR-A-2 306 478 décrit un tel réseau de transmission synchrone de type multipoints par paquets. Dans ce dispositif, une transmission de message débute par un signal binaire de synchronisation. Une interruption à un moment quelconque est interprétée comme une fin de message, le réseau se trouvant immédiatement à l'état de repos. Ce dispositif fonctionne avec un code véhiculant l'horloge de l'expéditeur. Les message contiennent les addresses de l'expéditeur et du destinataire. En cas de collision sur le réseau, les expéditeurs s'interrompent et reprennent l'émission après une attente de durée aléatoire, cette durée pouvant être pratiquement nulle.

Le document EP-A-0023105 décrit également un tel dispositif utilisant le principe de la contention, mais dans lequel le message est transmis dans un code particulier contenant des paquets de 8 signaux binaires. La transmission est de type synchrone, le message véhiculant l'horloge. Aucune adresse de destinataire n'est envoyée, de sorte que tous les récepteurs sont destinataires de tous les messages. Le code particulier oblige à attendre au moins la durée d'un paquet avant de reprendre une émission interrompue.

Le document GB-A-2013452 décrit un dispositif de type déterministe dans lequel l'équipement expéditeur désigne son successeur, les équipements étant ainsi autorisés à émettre les uns après les autres selon un ordre modifiable. Il s'agit d'une technique très différente de la contention.

Pour les besoins en communication moins rapide que les techniques synchrones, et conduisant à des circuits moins onéreux, on a développé des réseaux de communication de données de type asynchrone multipoints par paquets. Une telle technique est décrite dans le document WO 82/04366. Dans un tel réseau à transmission de type asynchrone, permettant de réaliser des installations à plus faible débit mais beaucoup moins onéreuses que les techniques synchrones, la détection de la disponibilité du réseau est plus délicate. En effet, dans une telle transmission en mode asynchrone, les messages sont formés d'une suite de caractères séparés par des intervalles pendant lesquels aucun signal n'est transmis, de sorte qu'il est insuffisant de vérifier l'absence de signaux pour savoir si un message n'est pas en cours de transmission.

Pour résoudre ce problème, le document WO 82/04366 décrit un procédé et un dispositif selon lequel le message, formé d'une suite de caractères asynchrones, est conditionné par chaque émetteur qui insère, avant le premier caractère du message, un signal particulier de début de message, et qui insère, après le dernier caractère du message, un signal particulier de fin de message. A chaque émission de caractère ou de signal, l'expéditeur compare les signaux correspondants aux caractères émis et les signaux détectés simultanément en écoute sur le réseau ; si les signaux sont identiques, il poursuit l'émission du message ; si les signaux sont différents, il émet un caractère de fin de message et il interrompt immédiatement l'émission du message, et reste à l'écoute pendant un temps aléatoire supérieur à un temps d'attente minimum. Dans ce document, les signaux de début de message et de fin de message sont des caractères d'interruption tels que les caractères d'interruption couramment employés dans la technique des communications de type asynchrone. Ces caractères d'interruption comprennent un signal continu de durée nettement supérieure à la durée des caractères formant le message, de sorte que leur forme est très différente de tous les codes utilisés dans les caractères composant le message.

Une telle technique nécessite de prévoir, dans chaque émetteur, des circuits particuliers pour générer les signaux d'interruption en début et en fin de message ; elle nécessite en outre de prévoir, dans chaque récepteur, des circuits particuliers pour détecteur les signaux d'interruption. Ces circuits particuliers ne sont pas normalement nécessaires pour une simple transmission de messages sur un réseau asynchrone. Il en résulte une relative complication des circuits.

En outre, la technique décrite dans ce document oblige à attendre, en fin de message, une durée supérieure à la durée du caractère d'interruption, avant de relancer une nouvelle émission. Etant donné que les caractères d'interruption sont relativement longs, il en résulte une perte sensible de temps de transmission.

La présente invention a notamment pour objet, dans les réseaux de communication asynchrone par paquets de type multipoints, de concevoir un procédé de transmission dans lequel la détection et le traitement des caractères de début de message permet, de manière probabiliste, en cas de collision, à un des émetteurs de continuer sa transmission sans être perturbé et aux autres émetteurs d'arrêter la transmission de leur caractère de début de message sans modifier de façon significative la forme d'onde résiduelle sur le réseau. Il en résulte que, dans la majorité des situations, le réseau reste actif puisque l'un des émetteurs, déterminé de manière probabiliste, poursuit valablement son émission. Il ne reste que quelques cas très rares de collisions qui ne pourront être détectés dès la réception du caractère de début de message, et dont la détection se fera ultérieurement. On constate que le procédé de l'invention conduit à une amélioration très sensible du taux d'occupation utile du réseau, sans qu'il y ait besoin de recourir à une hiérarchie déterministe des priorités.

Selon un autre objet, l'invention enseigne d'utiliser un conditionnement de messages permettant d'être généré et traité au moyen de circuits nettement simplifiés. En particulier, les signaux de début et de fin de message sont générés et traités par les circuits qui génèrent et traitent eux-mêmes les caractères significatifs du message. On entend par caractères significatifs du message les caractères qui contiennent l'information à transmettre entre l'émetteur et le récepteur.

Selon un autre objet de l'invention, le conditionnement du message permet d'éviter les pertes de temps de transmission, par le fait que l'on évite d'utiliser des caractères d'interruption dont la durée est relativement longue.

Un autre objet de l'invention est d'introduire une possibilité de priorités entre les différents émetteurs, favorisant la transmission de messages prioritaires avant la transmission de messages non prioritaires. Toutefois, malgré l'introduction de telles priorités, la transmission de messages selon l'invention conserve son caractère fondamentalement probabiliste.

Pour atteindre ces objets ainsi que d'autres, la présente invention prévoit un procédé pour la communication série asynchrone de type multipoints de messages logiques entre plusieurs émetteurs-récepteurs connectés en parallèle sur un réseau, les messages étant formés d'une suite de signaux binaires, sans horloge incorporée, groupés en caractères codés séparés par des intervalles, chaque caractère comprenant un signal binaire de début de caractère et un signal binaire de fin de caractère, les messages comprenant un caractère de début de message, éventuellement un ou des caractères pour désigner l'adresse du ou des destinataires, éventuellement un ou des caractères pour désigner l'adresse de l'expéditeur, éventuellement des caractères significatifs, et un caractère de fin de message, le procédé comprenant une première phase de réception au cours de laquelle l'expéditeur écoute les signaux éventuels présents sur le réseau et inhibe l'émission tant qu'un signal est présent, une seconde phase d'émission au cours de laquelle l'expéditeur émet un message et procède à la réception simultanée des signaux et caractères présents sur le réseau, à la comparaison entre ces signaux et les signaux émis, et à l'interruption de l'émission du message si les signaux présents et émis diffèrent, l'émission interrompue étant recommencée ultérieurement après une nouvelle phase initiale de réception de durée aléatoire ; lorsque les signaux reçus et les signaux émis diffèrent, l'expéditeur inhibe l'émission du message, de sorte qu'aucun caractère n'est plus émis sur le réseau à compter de l'ordre d'inhibition.

Selon un mode de réalisation, aucun signal binaire n'est plus émis sur le réseau à compter de l'ordre d'inhibition.

De préférence, les caractères de début de message et de fin de message comprennent une impulsion continue dont la durée est égale à la durée de l'ensemble des signaux binaires significatifs composant un caractère intermédiaire des messages augmentée de la durée de deux signaux binaires.

Il se trouve qu'une telle impulsion continue est toujours reconnaissable par le système, qui peut en déduire la présence d'un début ou d'une fin de message.

Dans un premier mode de réalisation, les caractères intermédiaires des messages, tels que les caractères significatifs ou les caractères d'adresses, comprennent, selon une norme habituelle en matière de transmission asynchrone, un signal binaire de début de caractère, n signaux binaires significatifs, et un signal binaire de fin de caractère. Les signaux binaires de début et de fin de caractère sont toujours différents ; le plus souvent, le signal binaire de début de caractère est à 0, tandis que le signal binaire de fin de caractère est à 1. Selon ce mode de réalisation, les caractères reconnaissables de début et de fin de message, constitués d'une impulsion continue de longueur égale à l'ensemble des signaux binaires et des signaux de début et de fin de caractère d'un caractère significatif, peuvent être générés de manière simple par le même circuit que les circuits qui génèrent les caractères significatifs du message ; ces caractères reconnaissables de début et de fin de message sont détectés automatiquement par un circuit de contrôle de trame. Les circuits de contrôle de trame sont généralement utilisés en transmission asynchrone, et génèrent un signal d'erreur lorsqu'ils reçoivent un caractère ne présentant pas une forme conforme à la norme de transmission asynchrone habituelle, à savoir un caractère n'ayant pas un signal binaire de début de caractère à 0 et un signal de fin de caractère à 1. Le signal de sortie du circuit de contrôle de trame est utilisé pour générer le signal de détection de début et de fin de message.

Dans un second mode de réalisation, les caractères intermédiaires de message comprennent un signal binaire de début de caractère, n signaux binaires significatifs, un signal binaire de parité, et un signal binaire de fin de caractère, selon une norme habituelle de transmission asynchrone. Dans ce mode de réalisation :
- les caractères significatifs comportent un signal binaire de parité impaire ;
- les caractères de début de message et de fin de message comportent un signal binaire de début de caractère à 0, n signaux binaires également à 0, et un signal binaire de parité également à 0 correspondant à une parité paire, le signal binaire de fin de caractère étant à 1 comme dans la norme habituelle ;
- de tels caractères de début et de fin de message sont ainsi reconnaissables par rapport aux caractères intermédiaires, et sont détectés automatiquement par les moyens de contrôle de parité, dont le signal de sortie est utilisé pour générer le signal de détection de caractère de début et de fin de message et traité par les moyens de désérialisation et de déconditionnement des messages ; ces caractères de début et de fin de message sont aisément produits par les mêmes circuits que les circuits de production des caractères intermédiaires des messages.

Selon un troisième mode de réalisation, les caractères intermédiaires de message comprennent également un signal binaire de début de caractère, n signaux binaires significatifs, un signal binaire de parité, et un signal binaire de fin de caractère, selon les normes habituelles de transmission asynchrone. Dans ce mode de réalisation :
- les caractères intermédiaires du message comprennent un signal binaire de parité paire ;
- les caractères reconnaissables de début et de fin de message comprennent un signal binaire de début de message à 0, n signaux binaires significatifs à 1, un signal binaire de parité également à 1 correspondant à une parité impaire, et un signal binaire de fin de caractère à 1 ; n doit être pair ;
- de tels caractères de début et de fin de message sont également reconnaissables et détectables par les moyens de contrôle de parité, dont le signal de sortie est utilisé pour générer le signal de détection de caractère de début et de fin de message, et est traité par les moyens de désérialisation et de déconditionnement des messages. De tels caractères de début et de fin de message sont aisément produits par les circuits habituels de production des caractères intermédiaires du message.

On pourra préférer le mode de réalisation dans lequel les caractères de début et de fin de message sont des impulsions de durée suffisante à 0. En effet, de telles impulsions sont aisément différenciables par rapport à la quasi totalité des impulsions parasites pouvant apparaître sur un réseau. Il en résulte une diminution sensible du risque d'erreurs.

Egalement, on pourra préférer les modes de réalisation comportant une génération et une détection de signaux binaires de parité. La présence de ces signaux permet un contrôle efficace de la qualité de transmission, contrôle dont la fiabilité n'est nullement affectée par le fait que, selon la présente invention, on utilise la détection des erreurs de parité pour détecter également les caractères de début et de fin de message.

Dans les modes de réalisation de la présente invention, on peut également introduire une priorité entre les messages à transmettre sur le réseau. Cette priorité est introduite, selon l'invention, en faisant varier le temps d'attente minimum prédéterminé que doit attendre un émetteur avant de transmettre son message, après la fin de réception des signaux sur le réseau.

D'autres objets, caractéristiques et avantages de la présente invention ressortiront de la description suivante, de modes de réalisation particuliers, faite en relation avec les figures jointes, parmi lesquelles :
- la figure 1 représente schématiquement un réseau d'émetteurs-récepteurs selon la présente invention ;
- la figure 2 représente les formes d'ondes d'un message à transmettre sous forme de paquet selon la présente invention ;
- la figure 3 représente un exemple de forme d'onde caractérisant un caractère intermédiaire à transmettre selon un premier mode de réalisation de la présente invention ;
- la figure 4 représente la forme d'onde d'un caractère de début ou de fin de message selon la présente invention à associer à un caractère intermédiaire de la figure 3 ;
- la figure 5 et la figure 6 illustrent les formes d'ondes d'un caractère intermédiaire et d'un caractère de début et de fin de message dans un second mode de réalisation de la présente invention ;
- les figures 7 et 8 représentent les formes d'ondes d'un caractère intermédiaire et d'un caractère de début ou de fin de message dans un troisième mode de réalisation de la présente invention ;
- la figure 9 représente schématiquement les principaux éléments fonctionnels d'un émetteur-récepteur constituant le réseau selon la présente invention ; et
- la figure 10 représente schématiquement les principaux éléments d'un émetteur-récepteur selon la présente invention.

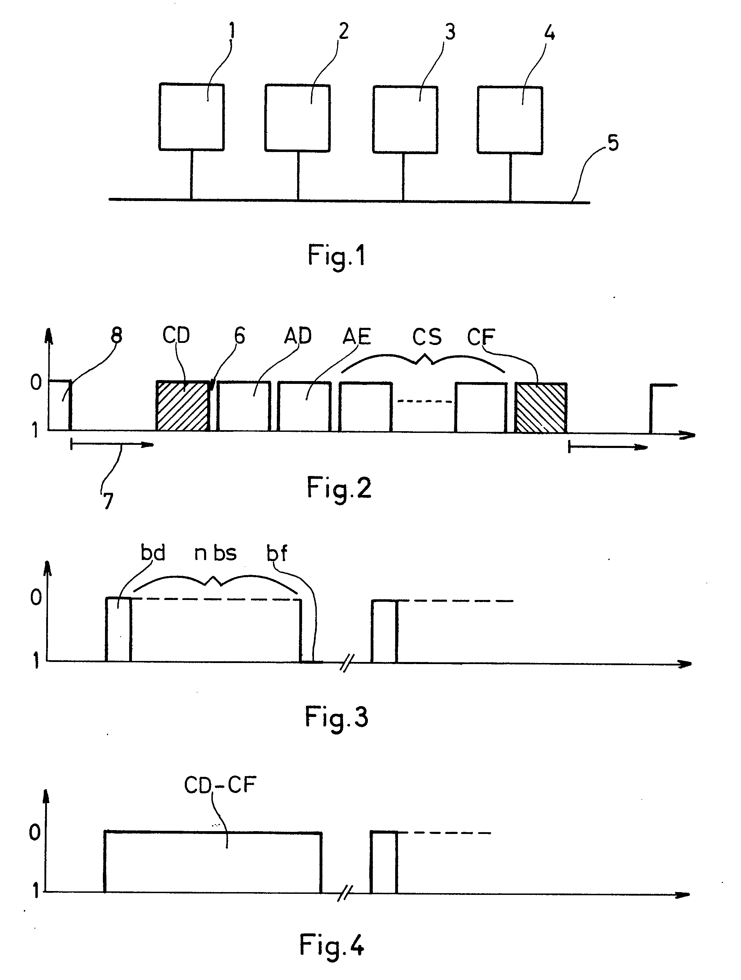

Le procédé de la présente invention permet de faire communiquer, comme le représente schématiquement la figure 1, plusieurs émetteurs-récepteurs sur un même réseau selon un mode asynchrone. Les émetteurs-récepteurs 1 à 4 sont connectés en parallèle à une même ligne 5, ou milieu de communication. Le milieu de communication représenté ici sous forme d'un simple conducteur, est un milieu de transmission de données en série logiquement passif, ou un milieu à canal unique qui sera appelé ci-après de façon générique ligne.

Chaque émetteur-récepteur peut comprendre en lui-même plusieurs étages : un étage d'interface en liaison directe avec la ligne 5, un étage d'émission et de réception des messages, un étage d'utilisation constitué par exemple d'un calculateur universel, d'un micro-processeur, ou d'un équipement périphérique.

La ligne 5 peut-être une ligne à 1 ou plusieurs conducteurs. En outre, on pourra, sans sortir du cadre de la présente invention, réaliser des réseaux à transmission sans fil, les émetteurs 1 à 4 étant reliés en parallèle par l'intermédiaire d'ondes hertziennes, ou de liaison optiques tels qu'infrarouges, fibres optiques.

On a représenté sur la figure 2 la constitution d'un message selon le procédé de la présente invention. Ce message comprend un signal de début de message CD, constitué d'un caractère particulier qui sera décrit ci-après, et un signal de fin de message CF qui est également un caractère particulier qui sera décrit ci-après. Entre le signal de début de message CD et le signal de fin de message CF, on insère en séquence l'ensemble des caractères intermédiaires composant le message. A titre d'exemple, le caractère de début de message CD est suivi d'un ou plusieurs caractères AD désignant par exemple l'adresse du ou des destinataires du message, puis d'un ou plusieurs caractères AE désignant par exemple l'adresse de l'expéditeur, et ensuite par les caractères significatifs CS du message, ou caractères contenant l'information à transmette. Le dernier caractère significatif est suivi par le caractère de fin de message CF.

Comme on le pratique généralement en matière de transmission asynchrone, les caractères selon la présente invention ont une forme similaire à celle représentée sur la figure 3 : le caractère comprend un signal binaire de début de caractère bd, suivi de n signaux binaires significatifs bs dont le codage permet de désigner le caractère à transmettre, le dernier signal binaire significatif étant suivi d'un signal binaire de fin de caractère bf. Selon la norme habituelle en matière de transmission asynchrone, le signal binaire de début de caractère bd est à l'état logique 0, et le signal binaire de fin de caractère bf est à l'état logique 1, pour un caractère intermédiaire tel que le caractère significatif CS du message. On peut par exemple choisir un nombre n égal à 8. On peut toutefois choisir un nombre différent, sans sortir du cadre de la présente invention.

Dans le cas ci-dessus où les caractères intermédiaires tels que le caractère significatif CS du message ne comprennent pas de signal binaire de parité, la durée totale d'un caractère est égale à la durée de (n + 2) signaux binaires. Dans ce premier mode de réalisation, les caractères de début de message CD et de fin de message CF sont choisis tels que le représente la figure 4 : ces caractères CD et CF sont une impulsion continue selon toute la durée d'un caractère normal, c'est à dire pendant la durée couvrant le signal binaire de début bd, les n signaux binaires significatifs bs, et le signal binaire de fin de caractère bf.

Un tel signal de début de message CD et de fin de message CF est reconnaissable parmi toutes les formes possibles de caractère significatif CS ou d'adresse AD ou AE du message. L'invention met à profit cette possibilité de reconnaître un tel caractère, pour conditionner de manière simple et efficace les messages à transmettre de manière asynchrone sur le réseau. Pour cela, les récepteurs selon la présente invention comportent avantageusement des moyens pour détecter les erreurs de trame dans les caractères reçus. Ces moyens sont bien connus dans la technique de communication asynchrone, et permettent notamment de vérifier que chaque caractère comprend bien un signal binaire de début de caractère bd à 0 et un signal binaire de fin de caractère bf à 1, ces deux signaux binaires étant séparés par un nombre correct n de signaux binaires pouvant chacun avoir une valeur logique quelconque. Lorsqu'un tel dispositif de contrôle de trame reçoit un caractère de début de message CD ou de fin de message CF décrit ci-desssus, il produit automatiquement un signal d'erreur de trame. Dans ce mode de réalisation, la logique interne du récepteur est conçue de telle manière que, lorsque le récepteur détecte un caractère dont tous les signaux binaires sont à l'état logique 0, et décèle une erreur de trame sur ce même caractère, il en déduit qu'il s'agit d'un caractère de début de message CD ou de fin de message CF.

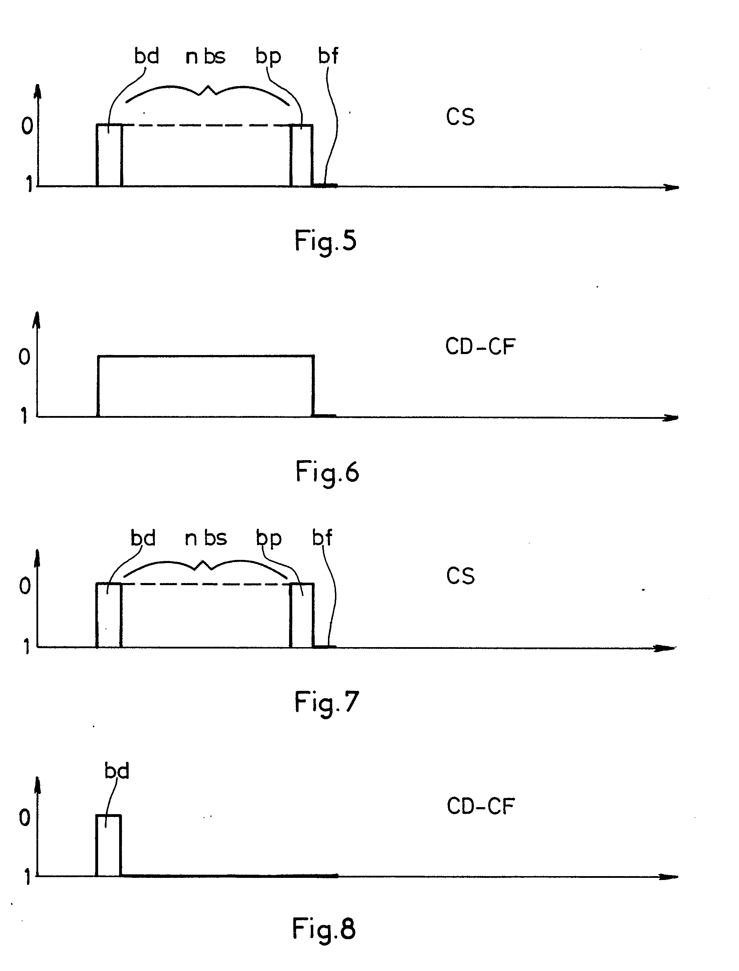

On a représenté sur les figures 5 et 6 un second mode de réalisation selon l'invention pour le conditionnement des messages. Dans ce second mode de réalisation, le caractère intermédiaire d'un message est représenté sur la figure 5, et les caractères de début de message CD ou de fin de message CF sont représentés sur la figure 6.

Les caractères intermédiaires tels que le caractère significatif CS comprennent un signal binaire de début de caractère bd, suivi de n signaux binaires significatifs bs. Le dernier signal binaire significatif est suivi d'un signal binaire de parité bp, lui-même suivi par le signal binaire de fin de caractère bf. Dans ce mode de réalisation, le signal binaire de parité bp est un signal de parité impaire, c'est à dire que le nombre de signaux binaires à 1 obtenu en comptant les signaux bs et bp est impair.

Les caractères de début de message CD et de fin de message CF de ce mode de réalisation, représentés sur la figure 6, sont constitués d'une impulsion continue, à l'état logique 0, pendant toute la durée d'un signal binaire de début de message bd, des n signaux binaires significatifs bs, et du signal binaire de parité bp.

En relation avec les formes de signaux représentés sur les figures 5 et 6, les émetteurs selon la présente invention comprennent avantageusement un dispositif de contrôle de parité, constitué de manière connue et largement utilisé dans le domaine des transmissions asynchrones. Un tel dispositif de contrôle de parité, auquel on indique que le signal binaire de parité bp est normalement un signal de parité impaire pour les caractères normaux d'un message, produit un signal d'erreur de parité lorsqu'il reçoit un signal CD ou CF tel que décrit en relation avec la figure 6. On peut donc utiliser, dans le récepteur, le dispositif de détection d'erreurs de parité pour générer des signaux de détection de caractère de début de message CD et de caractère de fin de message CF. On utilise pour cela la logique interne du récepteur pour reconnaître un caractère de début ou de fin de message lorsque le caractère reçu comprend tous ses signaux binaires, significatifs bs à l'état logique 0, et présente une erreur de parité.

Selon un troisième mode de réalisation de l'invention, décrit en relation avec les figures 7 et 8, les caractères intermédiaires tels que le caractère significatif CS de message comprennent un signal binaire de début de message bd, n signaux binaires significatifs bs, un signal binaire de parité bp, et un signal binaire de fin de caractère bf; dans ce mode de réalisation, le signal binaire de parité bp est un signal de parité paire, et le nombre n doit être pair.

En relation avec un tel format de caractère intermédiaire, le caractère de début de message CD ou de fin de message CF est représenté sur la figure 8 : ce caractère comprend un signal binaire de début de caractère bd à l'état logique 0, suivi de n signaux binaires à l'état logique 1 et de deux derniers signaux binaires à l'état logique 1, formant une impulsion continue à l'état logique 1 dont la durée est égale à la durée de (n + 2) signaux binaires.

Comme dans le mode de réalisation précédent, les récepteurs selon la présente invention comportent avantageusement des moyens de contrôle de parité. Lors de la réception d'un caractère de début de message CD ou de caractère de fin de message CF tel que représenté sur la figure 8, les moyens de contrôle de parité détectent une erreur de parité, et le signal qu'ils produisent peut-être utilisé comme signal de détection d'un caractère de début de message CD ou d'un caractère de fin de message CF. On utilise pour cela la logique interne du récepteur pour reconnaître un caractère de début ou de fin de message lorsque le caractère reçu comprend tous ses signaux binaires significatifs bs à l'état logique 1, et présente une erreur de parité. Ce mode de réalisation fonctionne à condition que n soit pair.

En se référant à la figure 2, tous les signaux et caractères formant un message selon l'invention sont constitués de l'une des façons décrites ci-dessus, et sont séparés par des intervalles tels que l'intervalle 6 pendant lesquels aucun signal n'est émis sur le réseau.

Avant de débuter la transmission d'un message tel que le message représenté sur la figure 2, un expéditeur doit tout d'abord s'assurer qu'aucune émission n'est en cours puis respecter un délai d'attente, représenté par la flèche 7, après le dernier signal 8 détecté sur le réseau. Le délai d'attente 7 doit avoir une durée supérieure à un temps d'attente minimum prédéterminé. Ce temps d'attente minimum est avantageusement au moins égal au temps de transmission d'un caractère sur le réseau, augmenté du temps de traitement interne habituel d'un circuit émetteur entre la fin de transmission d'un caractère et le début de l'émission du suivant, et augmenté du temps de propagation des signaux entre les points extrêmes du réseau.

Les intervalles tels que l'intervalle 6 entre caractères d'un même message peuvent avoir une longueur essentiellement variable, cette longueur pouvant être très faible, voire sensiblement nulle.

En cours d'émission d'un message, et à chaque émission de caractères composant ce message, l'expéditeur compare les signaux correspondant aux caractères à émettre et les signaux détectés simultanément en écoute. Selon le résultat de cette comparaison, si les signaux sont identiques, l'expéditeur poursuit l'émission du message. Par contre, si les signaux sont différents, l'expéditeur interrompt l'émis sion du message puis reste à l'écoute pendant un délai d'attente, et recommence l'émission à l'issue de ce délai d'attente. Le délai d'attente doit être différent pour chaque émetteur-récepteur pour que, si plusieurs expéditeurs sont en attente d'émission alors qu'un troisième est en oeuvre, il ne se produise pas de collision systématique à la reprise des émissions. De préférence, le délai d'attente est toujours supérieur au temps d'attente minimum prédéterminé, et a une durée aléatoire pour ne pas introduire de hiérarchie entre les divers émetteurs-récepteurs.

Au cours de la phase de comparaison des signaux correspondant au caractère émis et des signaux détectés simultanément en écoute par l'expéditeur, la comparaison peut-être effectuée en fin d'émission du caractère. On peut ainsi utiliser pour cette comparaison les circuits logiques habituels de comparaison des caractères, ce qui conduit à des réalisations peu onéreuses.

On peut cependant préférer effectuer ces comparaisons en fin d'émission de chaque signal binaire contenu dans le caractère, ou pendant cette émission, ce qui accélère sensiblement la détection des erreurs ou des collisions. De manière générale, toutes méthodes de comparaison sont possibles.

Pendant la phase d'écoute initiale, l'expéditeur doit vérifier qu'aucun message n'est en cours de transmission. Cette vérification se fait de préférence en vérifiant d'une part qu'aucun caractère n'a été reçu pendant la phase d'écoute initiale, et d'autre part que le réseau est à l'état de repos au moment où l'expéditeur envisage de commencer l'émission.

De manière connue, il est également possible selon la présente invention de prévoir une phase permettant de produire immédiatement un signal d'accusé de réception envoyé par le destinataire à l'expéditeur de façon à occuper le réseau pendant un temps minimal. Le message d'accusé réception peut-être émis avant la fin du temps d'attente minimum prédéterminé qui suit la fin du message reçu.

L'un des aspects fondamentaux de la transmission de messages selon la présente invention est son caractère probabiliste, c'est à dire le fait que, en cas de collision, l'expéditeur qui arrive à poursuivre l'émission de son message est déterminé, dans la grande majorité des cas, de manière totalement aléatoire, c'est à dire selon son rang d'arrivée sur le réseau.

Toutefois, ce caractère fondamentalement probabiliste de la transmission n'est pas incompatible avec l'introduction de priorités.

Une première façon d'introduire de telles priorités est de modifier, en fonction du message à émettre, la durée d'attente aléatoire que doit attendre un émetteur avant d'émettre un message après le dernier signal reçu sur le réseau. Pour illustrer cette possibilité, supposons que deux émetteurs aient chacun un message à émettre, le premier émetteur voulant émettre un message relativement urgent, le second émetteur voulant émettre un message sans caractère d'urgence. On fixe alors la durée d'attente aléatoire que doit attendre le premier émetteur selon une plage de variation dont la durée maximale est courte, et on fixe la durée d'attente aléatoire que doit attendre le second émetteur dans une plage de variation dont la durée maximale est relativement longue. On comprend que, dans ces conditions, le premier émetteur va probablement attendre une durée plus courte que le second émetteur pour reprendre l'émission après une interruption ou après la phase d'écoute initiale. Le premier message se trouve ainsi être prioritaire sur le second message. Cette priorité n'enlève toutefois pas le caractère probabiliste de la transmission. En effet, si deux messages, à priorité similaire, correspondent à des durées d'attente aléatoires prédéterminées à plages de variation identiques, l'ordre d'émission entre les deux messages sera encore choisi de manière probabiliste.

Dans l'exemple précédent, on conçoit qu'il peut exister des cas où le message non prioritaire arrivera à être transmis avant le message prioritaire. Si l'on veut obtenir un respect plus strict de la priorité, on peut définir au moins deux plages de variation distinctes, sans recoupement, pour la durée d'attente aléatoire d'émission après réception du dernier signal reçu. Par exemple, pour un message prioritaire, on fixera la durée d'attente aléatoire d'émission du premier émetteur dans une plage s'étendant de 10 micro-secondes à 100 micro-secondes, et on fixera la durée d'attente aléatoire du second émetteur de message non prioritaire dans une plage s'étendant de 150 micro-secondes à 250 micro-secondes. Dans ces conditions, on comprend que l'émission du premier message prioritaire interviendra de manière certaine avant l'émission du second message non prioritaire.

Il est bien entendu possible de prévoir une succession de plus de deux plages de variation de la durée d'attente aléatoire, et définissant une succession de priorités.

Les messages présentant le même degré de priorité seront transmis sur le réseau dans un ordre déterminé de manière probabiliste.

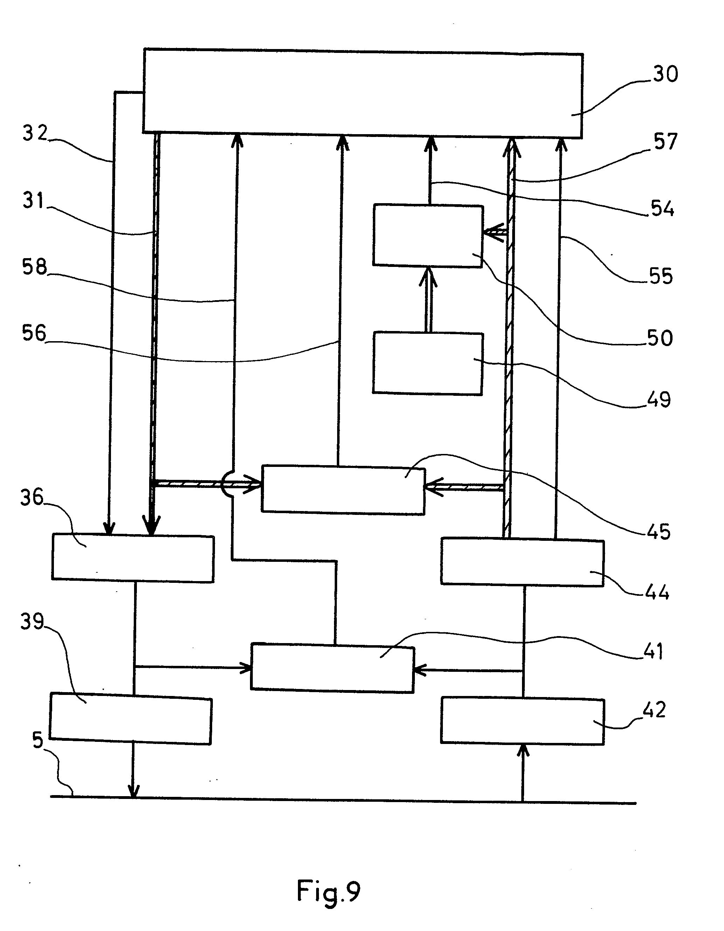

La figure 9 représente les principaux éléments fonctionnels d'un émetteur-récepteur selon la présente invention. Cet émetteur-récepteur comprend une unité de génération et de traitement des messages 30 comportant plusieurs lignes de sortie 31, véhiculant le caractère à transmettre vers un circuit de sérialisation 36. Une ligne de sortie 32 contrôle la transmission des caractères entre l'unité de génération 30 et le circuit de sérialisation 36. Le circuit de sérialisation 36 met en série, en séquence, les signaux binaires reçus de l'unité de génération et de traitement des messages 30 par les lignes de sortie 31. La sortie du circuit de sérialisation 36 est connectée à l'entrée d'un circuit d'interface de ligne 39 dont la sortie est connectée à la ligne 5.

L'unité de génération et de traitement de messages 30 comporte également plusieurs lignes d'entrée 57 véhiculant le caractère reçu, une ligne d'entrée 55 contrôlant le transfert des caractères entre un circuit de désérialisation 44 et l'unité de traitement 30, une ligne d'entrée 56 raccordée à la sortie d'un circuit 45 de comparaison des signaux émis et des signaux reçus par l'émetteur-récepteur. Le circuit désérialisateur 44 est connecté à la sortie d'un interface de réception de ligne 42, dont l'entrée est connectée à la ligne 5. Une ligne d'entrée 54 de l'unité de génération et de traitement de message 30 est raccordée à la sortie d'un circuit comparateur 50 destiné à comparer le caractère reçu sur les lignes 57 à l'adresse de l'équipement émetteur-récepteur définie par un circuit 49.

Sur la figure, on a également représenté une réalisation possible comprenant un circuit de détection de collision 41. Le circuit 41 est utilisé si la comparaison entre signal émis et signal reçu s'effectue après ou au cours de la transmission de chaque élément binaire composant les caractères. La sortie du circuit de détection de collision 41 est connectée à l'entrée 58 de l'unité de génération et de traitement de message 30.

Dans le mode de réalisation qui précède, les circuits constituant l'émetteur-récepteur peuvent être réalisés par des moyens électroni ques bien connus des spécialistes. Pour cette raison, il es inutile de décrire en détail la réalisation de ces circuits.

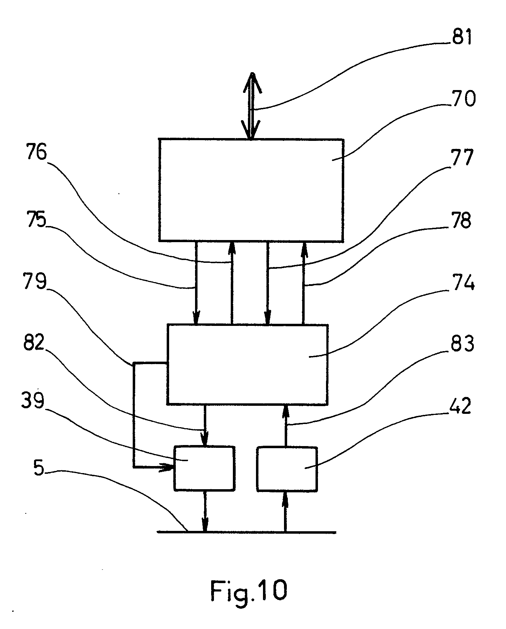

La réalisation des mêmes fonctions décrites ci-dessus peut être obtenue de manière particulièrement simple en utilisant la technique des microprocesseurs, comme le décrit le mode de réalisation suivant représenté schématiquement sur la figure 10. Dans ce mode de réalisation, l'unité logique de commande 70 réalise les fonctions de reconnaissance d'adresse des paquets reçus, mémorise les paquets reçus et à émettre, génère les paquets complets à l'aide d'un circuit de sérialisation/désérialisation intégré. Elle est connectée d'une manière connue, avec l'équipement raccordé au système de transmission par une série de lignes 81. Elle est également connectée à un dispositif logique 74 chargé de valider ou d'inhiber la transmission sur la ligne 5 à l'aide de la ligne 79 qui valide le circuit d'interface de sortie 39, de comparer lors de la transmission les signaux transmis 82 et les signaux reçus 83 en sortie du circuit d'interface d'entrée 42, de détecter les collisions et d'informer l'unité logique de commande 70 par la ligne 78 en cas de collision. La ligne 75 permet à l'unité logique 70 d'indiquer au dispositif 74 que des données vont être émises sur la ligne 77. Les données reçues 83 sont transmises à l'unité logique 70 par la ligne 76 sauf lorsqu'elles correspondent aux données émises en 77.

Le circuit 70 est par exemple un microprocesseur de la famille 8051 disponible auprès de la société INTEL.

La présente invention n'est pas limitée aux modes de réalisation qui ont été explicitement décrits mais elle en inclus les diverses variantes et généralisations contenues dans le domaine des revendications ci-après.

## Revendications

1 - Procédé pour la communication série asynchrone de type multipoints de messages logiques entre plusieurs émetteurs-récepteurs connectés en parallèle sur un réseau, les messages étant formés d'une suite de signaux binaires, sans horloge incorporée, groupés en caractères codés séparés par des intervalles (6), chaque caractère comprenant un signal binaire de début de caractère (bd) et un signal binaire de fin de caractère (bf), les messages comprenant un caractère de début de message (CD), au moins un caractère pour désigner l'adresse du ou des destinataires (AD), éventuellement un ou des caractères pour désigner l'adresse de l'expéditeur (AE), éventuellement des caractères significatifs (CS), et un caractère de fin de message (CF), le procédé comprenant une première phase de réception au cours de laquelle l'expéditeur écoute les signaux éventuels présents sur le réseau et inhibe l'émission tant qu'un signal est présent, une seconde phase d'émission au cours de laquelle l'expéditeur émet un message et procède à la réception simultanée des signaux et caractères présents sur le réseau, à la comparaison entre ces signaux et les signaux émis, et à l'interruption de l'émission du message si les signaux présents et émis diffèrent, l'émission interrompue étant recommencée ultérieurement après une nouvelle phase initiale de réception de durée aléatoire, caractérisé en ce que :
- lorsque les signaux reçus et les signaux émis diffèrent, l'expéditeur inhibe l'émission du message, de sorte qu'il n'émet plus aucun caractère sur le réseau à compter de l'ordre d'inhibition.

2 - Procédé selon la revendication 1, caractérisé en ce que l'expéditeur n'émet plus aucun signal binaire sur le réseau à compter de l'ordre d'inhibition.

3 - Procédé selon l'une des revendications 1 ou 2, caractérisé en ce que les caractères de début de message (CD) et de fin de message (CF) comprennent une impulsion continue dont la durée est égale à la durée de l'ensemble des signaux binaires significatifs composant un caractère intermédiaire (CS, AE, AD) des messages augmentée de la durée de deux signaux binaires.

4 - Procédé selon la revendication 3, caractérisé en ce que :
- les caractères intermédiaires courants des messages comprennent un signal binaire de début de caractère (bd) à l'état logique 0, n signaux binaires significatifs (bs), et un signal binaire de fin de caractère (bf) à l'état logique 1 selon la norme habituelle de transmission asynchrone de caractère,
- les caractères de début de message (CD) et de fin de message (CF) sont formés d'une impulsion continue, à l'état logique 0, dont la durée est égale à la durée totale d'un caractère, y compris les signaux binaires de début de caractère (bd) et de fin de caractère (bf) ;
- le caractère reçu est interprété par un émetteur-récepteur comme étant un caractère de début de message (CD) ou de fin de message (CF) lorsque le récepteur constate que ce caractère présente une erreur de trame et que tous ses signaux binaires significatifs sont à l'état logique 0.

5 - Procédé selon la revendication 3, caractérisé en ce que :
- les caractères intermédiaires courants des messages comprennent un signal binaire de début de caractère (bd), n signaux binaires significatifs (bs), un signal binaire de parité impaire (bp), un signal binaire de fin de caractère (bf), selon les normes habituelles de transmission asynchrone,
- les caractères de début de message (CD) et de fin de message (CF) sont des impulsions formées de n signaux binaires significatifs à l'état logique 0 avec un signal binaire de parité à l'état logique 0 ;
- les caractères de début de message (CD) et de fin de message (CF) sont détectés, dans le récepteur, lorsque le récepteur constate que ce caractère présente une erreur de parité et que tous ses signaux binaires significatifs sont à l'état logique 0.

6 - Procédé selon la revendication 3, caractérisé en ce que :
- les caractères intermédiaires courants (CS) des messages comprennent un signal binaire de début de caractère (bd), n signaux binaires significatifs (bs) en nombre pair, un signal binaire de parité paire (bp), un signal binaire de fin de caractère (bf), selon les normes habituelles de transmission asynchrone,
- les caractères de début de message (CD) et de fin de message (CF) sont des impulsions formées de n signaux binaires significatifs à l'état logique 1 avec un signal binaire de parité à l'état logique 1 ;
- les caractères de début de message (CD) et de fin de message (CF) sont détectés, dans le récepteur, lorsque le récepteur constate que ce caractère présente une erreur de parité et que tous ses signaux binaires significatifs sont à l'état logique 1.

7 - Procédé selon l'une quelconque des revendications 1 à 6, caractérisé en ce que l'on modifie, en fonction du message à émettre, la durée d'attente aléatoire que doit attendre un émetteur avant d'émettre un message après le dernier signal reçu sur le réseau.

8 - Procédé selon la revendication 7, caractérisé en ce que l'on définit au moins deux plages de variation distinctes, sans recoupement, pour la durée d'attente aléatoire d'émission après réception du dernier signal reçu.

9 - Dispositif pour la communication série asynchrone de type multipoints de messages logiques, chaque émetteur-récepteur comprenant :

- des moyens pour mémoriser chaque caractère composant le message à émettre, des moyens pour émettre en série les signaux binaires formant les messages, des moyens de réception et de mémorisation des signaux reçus sur le réseau, des moyens pour générer les caractères désignant l'adresse du ou des expéditeurs et celle du destinataire, des moyens pour comparer les signaux correspondants au message à émettre et les signaux correspondants au message reçu simultanément par les moyens de réception, des moyens pour inhiber pendant une durée aléatoire l'émission si les signaux présents et émis diffèrent,

- des moyens pour organiser les messages en une suite de signaux binaires groupés en caractères codés, sans horloge incorporée, chaque caractère transmis comprenant un ensemble de signaux binaires significatifs (bs) précédé d'un signal binaire de début de caractère (bd) et suivi d'un signal binaire de fin de caractère (bf),

- des moyens de temporisation pour produire l'inhibition de l'émission pendant une durée aléatoire supérieure à un temps d'attente prédéterminé suivant la réception d'un signal précédent,

- des moyens pour générer dans l'émetteur un caractère de début de message (CD), et des moyens pour détecter dans le récepteur le caractère de début de message (CD),

- des moyens pour générer dans l'émetteur un caractère de fin de message (CF), et des moyens pour détecter dans le récepteur le caractère de fin de message (CF),

- des moyens pour conditionner, dans l'émetteur, les messages en une suite de caractères, avec un caractère de début de message (CD), des caractères intermédiaires (CS, AE, AD), un caractère de fin de message (CF),

- des moyens pour déconditionner, dans le récepteur, les messages et extraire les caractères intermédiaires,

caractérisé en ce que :

- les moyens pour produire un caractère de début de message (CD) ou de fin de message (CF) sont constitués par les moyens assurant eux-mêmes la génération des caractères intermédiaires des messages, ces moyens permettant de générer un caractère (CD, CF) de même durée qu'un caractère intermédiaire courant, comprenant une impulsion continue dont la durée est égale à la durée de l'ensemble des signaux binaires significatifs (bs) composant un caractère intermédiaire (CS, AE, AD) des messages augmentée de la durée de deux signaux binaires.

10 - Dispositif selon la revendication 9, caractérisé en ce que les récepteurs du dispositif comprennent :

- des moyens de contrôle de trame pour analyser chaque caractère reçu, et produire des signaux d'erreur de trame,

- des moyens d'analyse du caractère reçu pour produire un signal de validation lorsque tous les signaux binaires significatifs (bs) du caractère reçu sont à l'état logique 0,

- des moyens de traitement recevant les signaux d'erreur de trame et les signaux de validation, et produisant un signal de réception d'un caractère de début de message (CD) ou de fin de message (CF) lorsque sont présents simultanément pour le caractère reçu un signal d'erreur de trame et un signal de validation.

11 - Dispositif selon la revendication 9, caractérisé en ce que les récepteurs du dispositif comprennent :

- des moyens de contrôle de parité impaire pour analyser chaque caractère reçu, et produire des signaux d'erreur de parité impaire,

- des moyens d'analyse du caractère reçu pour produire un signal de validation lorsque tous les signaux binaires significatifs (bs) du caractère reçu sont à l'état logique 0,

- des moyens de traitement recevant les signaux d'erreur de parité impaire et les signaux de validation, et produisant un signal de réception d'un caractère de début de message (CD) ou de fin de message (CF) lorsque sont présents simultanément pour le caractère reçu un signal d'erreur de parité impaire et un signal de validation.

12 - Dispositif selon la revendication 9, caractérisé en ce que les récepteurs du dispositif comprennent :

- des moyens de contrôle de parité paire pour analyser chaque caractère reçu, et produire des signaux d'erreur de parité paire,

- des moyens d'analyse du caractère reçu pour produire un signal de validation lorsque tous les signaux binaires significatifs (bs) du caractère reçu sont à l'état logique 1,

- des moyens de traitement recevant les signaux d'erreur de parité paire et les signaux de validation, et produisant un signal de réception d'un caractère de début de message (CD) ou de fin de message (CF) lorsque sont présents simultanément pour le caractère reçu un signal d'erreur de parité paire et un signal de validation.

Fig.1

Fig.2

Fig.3

Fig.4

Fig.5

Fig.6

Fig.7

Fig.8

Fig.9

Fig.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 204 366 (RYCKEBOER) <br> * Page 3, ligne 23 - page 4, ligne 20; page 6, lignes 12-22; page 7, lignes 14-28; page 10, lignes 11-30; figures 2,4 * <br> --- | 1-6,9 | H 04 L 11/16 |
| A | FR-A-2 551 278 (APSIS) <br> * Page 1, ligne 38 - page 2, ligne 3; page 5, lignes 12-31; figure 3 * <br> --- | 1,8 | |
| A | IEEE TRANSACTIONS ON CONSUMER ELECTRONICS, vol. CE-32, no. 1, février 1986, pages 1-7, IEEE, New York, US; R. HAMABE et al.: "A revised new proposal for standardization of home bus system for home autmation" <br> * Page 4 * <br> --- | 1-6 | |
| A | IEEE TRANSACTIONS ON CONSUMER ELECTRONICS, vol. CE-29, no. 3, août 1983, pages 297-304, IEEE, New York, US; F.W. GUTZWILLER et al.: "Homenet: A control network, for consumer applications" <br> * Page 302, lignes 15-32 * <br> ----- | 1 | DOMAINES TECHNIQUES RECHERCHES (Int. Cl.4) <br><br> H 04 L |

Le présent rapport a été établi pour toutes les revendications

| Lieu de la recherche | Date d'achèvement de la recherche | Examinateur |
|---|---|---|
| LA HAYE | 14-08-1989 | DE LA FUENTE DEL AGUA P. |